# EUROPEAN PATENT APPLICATION

(11) **EP 4 401 254 A1**
(43) Date of publication of application: **17.07.2024**
(21) Application number: 23305049.1
(22) Date of filing: 13.01.2023
(51) Int. Cl.: H02G 5/00, B60R 16/02, H01R 25/16, B29C 45/14, H01B 7/00, H01B 7/08

(54) **COMPONENT FOR TRANSMITTING ELECTRIC CURRENT**

(71) Applicant: Nexans, 92400 Courbevoie (FR)
(72) Inventor: HOEHNE, Armin, 92721 STÖRNSTEIN (DE); DOELLINGER, Ulrich, 92685 FLOSS (DE); STEINBERG, Helmut, 92721 STÖRNSTEIN (DE)
(74) Representative: Ipsilon

(57) **Abstract**

A component (300) for transmitting electric current comprising a rigid electric conductor (301) and connecting elements (304,307). The connecting elements (304,307) are firmly bonded with the rigid conductor (301). A one-piece insulation (302) encloses the rigid conductor and the connecting elements. The rigid electric conductor is manufactured as a punching and bending part.

## Description

### Field

The present disclosure relates to a component for transmitting electric current that comprises a rigid electric conductor and connecting elements.

### Background

The replacement of combustion engines by electric motors in automobiles and other vehicles also influences the manufacturing of the vehicles. During manufacturing of conventional cars with combustion engines the chassis is combined with the car body in a step that is called "marriage". For electric cars it is attempted to perform a similar manufacturing step by "marrying" the chassis of the electric car, which is also called "skateboard", accommodating the battery and electric driving components with the car body where a charging socket is mounted. Due to the high currents that must be transmitted from the charging socket to the battery, the charging socket is frequently connected with the battery by a bus bar comprising a solid and consequently rigid conductor. In the assembled electric car, the charging socket is normally situated in vertical direction above the battery. Hence, it is necessary that the bus bar connecting the charging socket with the battery establishes a three-dimensional current path for the charging current. Manufacturing such three-dimensional bus bars with all connecting elements is difficult for the following reasons.

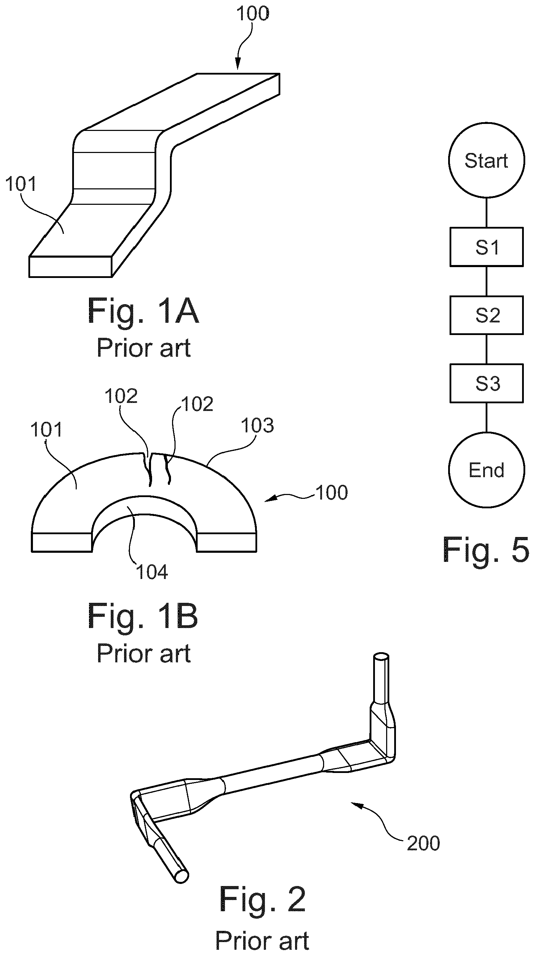

Flat solid bus bars can only be bent perpendicularly to the main surfaces but not in a horizontal direction of their main surfaces because there are significant length differences between the inner and outer radius of the bent bus bar as it is illustrated in Figure 1A and 1B, respectively. In Figure 1A the busbar 100 is bent in perpendicular direction relative to its main surface 101, while in figure 1B the busbar 100 is bent in horizontal direction relative to its main surface 101. In the latter case cracks 102 occur in the busbar 100 because of the length difference between the outer radius 103 and the inner radius 104 in the horizontally bent busbar 100.

In SE1650474 A1 it is suggested to use a tubular conductor 200 to overcome the described problem because the tubular conductor can be flattened in different planes such that a flat conductor is achieved that can be bent in perpendicular direction relative to its main surface as shown in Figure 2.

In view of the limitations of existing components for transmitting electric current, there remains a desire for a component to overcome or at least improve one or more of the problems mentioned at the outset.

### Summary

According to a first aspect the present disclosure suggests a component for transmitting electric current comprising a rigid electric conductor and connecting elements. The connecting elements are firmly bonded with the rigid conductor. A one-piece insulation encloses the rigid conductor and the connecting elements.

The one-piece insulation has no interfaces between which moisture could ingress in particular when the component ages and the insulation tends to shrink.

In one useful embodiment the component forms a three-dimensional current path. For most electric cars a three-dimensional current path is required to connect the charging socket with the battery of the electric car accommodated in the skateboard of the electric car.

In an advantageous embodiment the rigid conductor is a flat solid conductor. A flat solid conductor offers high current carrying capacity and good transverse conductivity. High current carrying capacity is desirable especially for the electric connection between the charging socket and the battery. A good transverse conductivity assures optimal usage of the cross-section of the conductor for current transport.

Advantageously the rigid conductor is a punching and bending part. The punching and bending part enables the three-dimensional current path for a flat solid conductor. Specifically, the punching and bending part allows for realizing a curvature in a horizontal plane of the flat conductor. To that end the conductor is punched with the desired curvature from a flat metal sheet. A curvature perpendicular to the horizontal plane of the flat conductor is realized by bending the flat conductor perpendicularly to its main surfaces.

According to a second aspect the present disclosure suggests a method for manufacturing a component according to the first aspect of the present disclosure. The method comprises
- shaping the rigid conductor to form a three-dimensional current path;
- bonding connecting elements with the rigid conductor;
- enclosing the rigid conductor and the connecting elements in a one-piece insulation.

Since the connecting elements are bonded with the rigid conductor before the conductor is enclosed in an insulation, no insulation must be removed prior to the bonding. Thus, the manufacturing of the component is facilitated. The bonding is performed for instance by Laser, ultrasonic or friction stir welding to name a few examples.

Advantageously the shaping the rigid conductor comprises punching a metal sheet. In this way it is possible to realize curvatures of the rigid conductor in a horizontal plane of the main surfaces of the conductor which is normally very difficult to achieve.

According to a useful for the development the shaping the rigid conductor comprises bending of the rigid conductor. The bending of the rigid conductor in a direction perpendicular to the main surfaces of the flat rigid conductor is a convenient supplement to achieve a three-dimensional shape of the conductor that is necessary to connect the charging socket and the battery of most electric cars.

In a useful embodiment enclosing the rigid conductor and the connecting elements in the one-piece insulation comprises
- depositing the one-piece insulation by chemical or physical vapor deposition, by spraying, by foaming, by overmolding, or by injection molding insulating material on the rigid conductor and the connecting elements.

Advantageously the method further comprises forming fixation elements together with the insulation. For instance, if the one-piece insulation is deposited by injection molding fixation elements needed to fix the component to the car body or to connect cables or hoses with a component. This simplifies and facilitates the manufacturing of the component.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1A: a flat solid busbar bent in perpendicular direction relative to its main surface;
- Fig. 1B: a flat solid busbar bent in horizontal direction relative to its main surface;
- Fig. 2: a tubular busbar flattened in different planes;
- Fig. 3A: a component according to the present disclosure;
- Fig. 3B: a variant of the component of Figure 3A;
- Fig. 4: a further component according to the present disclosure; and
- Fig. 5: a schematic flow diagram.

In the figures the same or similar components are labelled with the same or similar reference signs.

### Detailed description

### a) Component

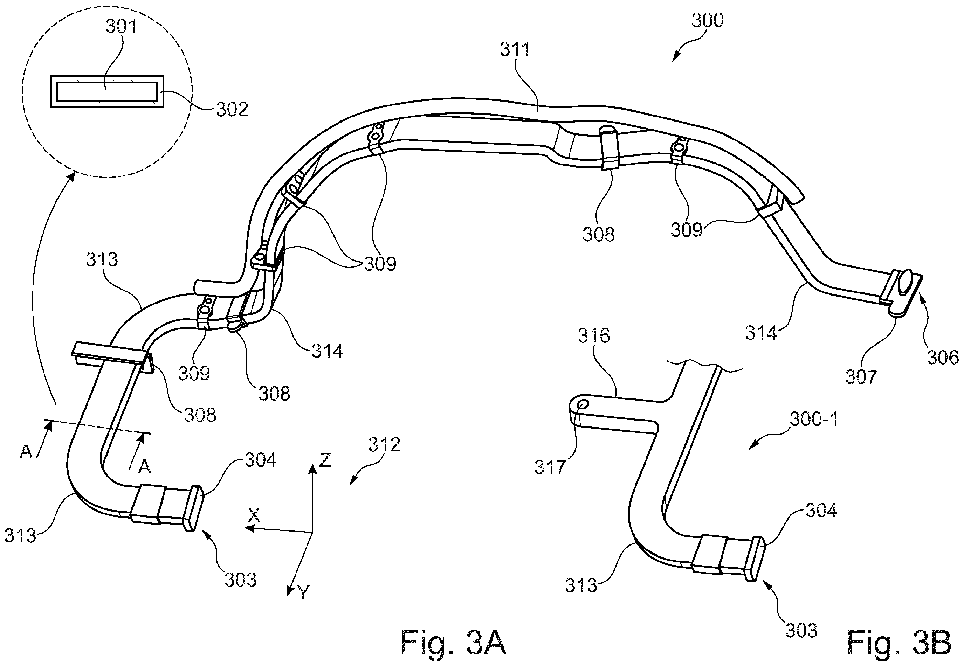

Figure 3A shows a component 300 according to the present disclosure in a perspective view. The component 300 comprises a flat solid and rigid conductor 301 that is shown in the insert illustrating a cross section along the line A-A. The conductor 301 is enclosed in the one-piece insulation 302. Thus, the component 300 forms an insulated busbar. A first end 303 of the component 300 is provided with a socket 304. In the mounted state of the component 300 the socket is connected with a corresponding plug of a battery of an electric car (not shown). In another embodiment the first end 303 is provided with a plug that is connectable with a socket of the battery. A second end 306 of the component 300 is provided with contact terminals 307. The contact terminals 307 are connected with a charging socket of the electric car (not shown). The one-piece insulation 302 also encloses the socket 304 and the contact terminals 307 forming connecting elements. Fixation elements 308, 309 are realized as integral parts of the one-piece insulation 302. In other embodiments the fixation elements 308, 309 are separate components from the one-piece insulation 302. The fixation elements 308, 309 are for instance binders, clips or clamps etc. In the embodiment of the component 300 shown in Figure 3 the fixation elements 308 are used to attach the component 300 to the car body while the fixation elements 309 are used secure a hose 311 to the component 300. In other embodiments other components such as a cable harness or individual cables are fixed by the fixation elements 309 instead of or in addition to the hose 311 to the component 300.

In practice, two components 300 are required to connect the charging socket with the battery. However, for explaining the concept and the advantages of the present disclosure it is sufficient to consider only a single component 300.

Figure 3A displays a coordinate system 312. The x- and y-axis of the coordinate system 312 span a horizontal plane that is parallel to the main surfaces of the conductor 301 corresponding to the main surfaces explained in connection with Figures 1A and 1B.

For connecting the charging socket with the battery accommodated in the skateboard of the electric car, the component 300 needs to bridge a certain distance in z-direction of the coordinate system 312 that is vertical to the horizontal plane because the charging socket is located in the car body at a height that can be reached comfortably by the user of the electric car. Thus, in most, if not in all, electric cars it is necessary that the component 300 realizes a three-dimensional current path which is difficult to achieve with solid conductors. Nevertheless, solid conductors are advantageous for this kind of application because of their high current carrying capacity and good transverse conductivity.

Figure 3B displays a portion of an alternative component 300-1 provided with an intermediate tap 316. The intermediate tap 316 has a contact hole 317 to receive a contact screw (not shown) to connect the tap 316 with an electrical device for instance. The electrical device is for example a fuse box.

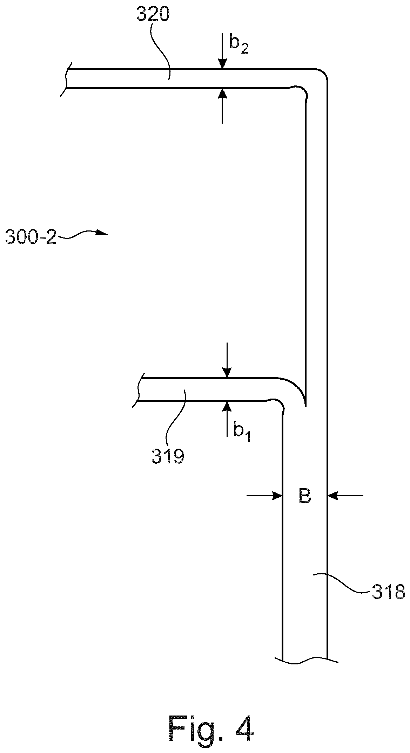

Figure 4 displays a further component 300-2 according to the present disclosure. The component 300-2 has a main branch 318 that is connected with the charging socket of an electric car. The main branch 318 has a width of B. A first side branch 319 connects with a first battery module and a second side branch 320 connects with a second battery module. The first and second branches have a width of b1 and b2, respectively, wherein b1 + b2 = B. The absolute values of the widths B, b1, and b2 are selected to comply with the required current carrying capacities of the respective branches 318-320. The battery module is only an example one of many other electrical devices that could be connected. The component 300-2 is an integral one-piece component without any welding interfaces, which simplifies manufacturing and reliability of component 300-2.

It is noted that components 300-1 and 300-2 are necessarily manufactured as a punching part and cannot be made from linear conductor bars or the like.

### b) Method for manufacturing the component

To overcome the described dilemma the present disclosure suggests manufacturing the solid conductor 301 of the component 300 as punching and bending part. Curvatures 313 in the horizontal x-y-plane are realized by punching the solid conductor 301 in an appropriate form out of a flat metal sheet such as aluminum or copper or their alloys and copper plated aluminium. Aluminium could be plated also with another metal having good electric conductivity. Likewise it is possible to use other metals than aluminium as conductors conductors . Curvatures 314 in a plane perpendicular to the horizontal x-y-plane are realized by bending the solid conductor 301. At least the punching cannot be realized with an insulated conductor. Therefore, the conductor 301 is shaped into its final form as a bare metal piece. The shaping of the conductor 301 is step S1 shown in a schematic flow diagram shown in Figure 5. The flow diagram summarizes the manufacturing steps for making the component. In step S2 connecting elements such as the socket 304 and the contact terminals 307 are bonded to the conductor 301 by welding, soldering or any other appropriate technology. In step S3 the conductor 301 and the connecting elements 304, 307 are enclosed in a one-piece insulation 302. The one-piece insulation is deposited by chemical or physical vapor deposition or by spraying insulating material on the rigid conductor and the connecting elements. Alternatively, the one-piece insulation is applied by injection molding which permits to realize at the same time the fixation elements 308, 309.

Alternatively, the punching and bending part forming the busbar is replaced by linear rods or bars for applications that do not require intermediate taps or bonding in the horizontal plane.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

- 100: Busbar
- 101: Main surface
- 102: Cracks
- 103: Outer radius
- 104: Inner radius

- 200: Tubular conductor

- 300,300-: Component
- 1, 300-2 301: Conductor
- 302: One-piece insulation
- 303: First end
- 304: Socket

- 306: Second end
- 307: Contact terminals
- 308,309: Fixation elements

- 311: Hose
- 312: Coordinate system
- 313: Horizontal curvature
- 314: Vertical curvature

- 316: Intermediate tap
- 317: Contact hole
- 318: Main branch
- 319: First side branch
- 320: Second side branch

## Claims

1. Component for transmitting electric current comprising a rigid electric conductor (301) and connecting elements (304,307), wherein the connecting elements are firmly bonded with the rigid conductor (301) **characterized in that** a one-piece insulation (302) encloses the rigid conductor and the connecting elements.

2. Component according to claim 1, wherein the component (300) forms a three-dimensional current path.

3. Component according to claim 1 or 2, wherein the rigid conductor (301) is a flat solid conductor.

4. Component according to claim 3, wherein the rigid conductor (301) is a punching and bending part.

5. Method for manufacturing a component according to one of the preceding claims, wherein the method comprises
- shaping (S1) the rigid conductor (301) to form a 3-D current path;
- bonding (S2) connecting elements (304,307) with the rigid conductor (301);
- enclosing (S3) the rigid conductor (301) and the connecting elements (304,307) in a one-piece insulation (302).

6. Method according to claim 5, wherein shaping the rigid conductor (301) comprises punching a metal sheet.

7. Method according to claim 5 or 6, wherein shaping the rigid conductor (301) comprises bending of the rigid conductor.

8. Method according to one of claims 5 to 7, wherein enclosing the rigid conductor (301) and the connecting elements (304,307) in the one-piece insulation (302) comprises
- depositing the one-piece insulation by chemical or physical vapor deposition, by spraying, by foaming, by overmolding, or by injection molding insulating material on the rigid conductor (301) and the connecting elements (304,307).

9. Method according to one of claims 5 to 8 further comprising
- forming fixation elements (308,309) together with the one-piece insulation.
